(19) **Europäisches Patentamt**
**European Patent Office**
**Office européen des brevets**

(11) **EP 2 827 176 A1**

(12) **EUROPEAN PATENT APPLICATION**

(43) Date of publication:
**21.01.2015 Bulletin 2015/04**

(51) Int Cl.:
**G01S 19/23** (2010.01)     **G01S 19/42** (2010.01)
**G01S 19/40** (2010.01)

(21) Application number: **14177255.8**

(22) Date of filing: **16.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.07.2013 CN 201310297717
15.07.2014 US 201414331389**

(71) Applicant: **O2 Micro, Inc.**
**Santa Clara, CA 95054 (US)**

(72) Inventors:
• **Gou, Juan**
**610041 Chengdu (CN)**
• **Zou, Jinghua**
**P.R.C. 610041 Chengdu (CN)**
• **Zhang, Weihua**
**P.R.C. 610041 Chengdu (CN)**

(74) Representative: **Lippert, Stachow & Partner**
**Patentanwälte**
**Postfach 30 02 08**
**51412 Bergisch Gladbach (DE)**

(54) **Method and receiver for determining system time of a navigation system**

(57)     Receiver and methods for determining system time of a navigation system is disclosed. In one example, the receiver includes a baseband processing module and a calculation module. The baseband processing module is configured for obtaining satellite information from the navigation system. The calculation module is configured for estimating a pseudorange based on the satellite information; smoothing the pseudorange via a code; calculating clock bias and clock drift based on the smoothed pseudorange; and determining system time of the navigation system based on the calculated clock bias and clock drift.

FIG. 1

**Description**

RELATED APPLICATIONS

This application claims priority to the benefit of Chinese Patent Application Number 201310297717.2, filed on July 16, 2013 with State Intellectual Property Office of the P.R. China (SIPO), all of which are fully incorporated herein by reference.

FIELD OF THE PRESENT TEACHING

The disclosure generally relates to the field of navigation technology, and specifically, the disclosure relates to method and receiver for determining a system time of a navigation system.

BACKGROUND

At present time, there are four sets of satellite navigation systems in the world: BeiDou (Compass) satellite navigation system, Global Positioning System (GPS), Global Navigation Satellite System (GLONASS) satellite navigation system, and Galileo satellite navigation system developed by China, United States, Russia, and Europe, respectively. The BeiDou satellite navigation system is self-developed by China and can work independently from other satellite navigation systems.

Conventionally, a receiver of a navigation system receives satellite information. Based on the satellite information, the receiver can calculate user information related to the user's position, velocity, and obtain accurate time information based on a calculated system time of the navigation system. The system time of the navigation system is highly accurate and usually carried by an impulse signal, Pulse-Per-Second (PPS). The accuracy of detected PPS at a receiver has become an important measure of the receiver's performance. The accuracy is closely related to the receiver's tracking performance and positioning performance with respect to a satellite signal.

SUMMARY

In accordance with an embodiment of the present teaching, a receiver and methods for improving accuracy of the system time PPS of the navigation system are disclosed.

In one embodiment, the receiver comprises: a calculation module, configured for receiving satellite information, analyzing pseudorange information included in the satellite information, screening and selecting one or more satellites for positioning, calculating position and velocity of the receiver based on the selected one or more satellites, determining system time of the navigation system based on processes of clock bias and timing variation rate of the clock, and outputting the PPS associated with the navigation system time.

In another embodiment, a method for improving accuracy of the system time PPS of the navigation system is disclosed. The method comprises the following. Satellite information is received from satellites. The satellites' pseudorange information included in the satellite information is analyzed. The satellites are screened to select one or more satellites for positioning. Based on the selected one or more satellites, position and velocity of the receiver are calculated. The system time of the navigation system is determined based on processes of clock bias and timing variation rate of the clock, so that the PPS associated with the navigation system time is generated and output.

The receiver and method according to various embodiments of the present teaching can provide a more accurate estimate of the navigation system time, based on calculations involving clock bias and timing variation rate of the clock, so that accuracy of the system navigation time PPS can be improved.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram illustrating an exemplary receiver, in accordance with one embodiment of the present teaching;
FIG. 2 is a block diagram illustrating an exemplary calculation module, in accordance with one embodiment of the present teaching;

FIG. 3 is a flowchart illustrating an exemplary process performed by a calculation module, in accordance with one embodiment of the present teaching;

FIG. 4 is a flowchart illustrating a portion of an exemplary process performed by a calculation module , in accordance with one embodiment of the present teaching;

FIG. 5 is a flowchart illustrating a portion of another exemplary process performed by a calculation module , in accordance with one embodiment of the present teaching; and

FIG. 6 is a flowchart illustrating a portion of yet another exemplary process performed by a calculation module, in accordance with one embodiment of the present teaching.

## DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

An accuracy of the system navigation time PPS is related to error of the local clock frequency f and error of the local clock counts. The error of the local clock frequency f may be caused by errors of the local clock bias $t_u$ and the timing variation rate (or frequency drift) of the local clock $\dot{t}_u$. In other words, to improve the accuracy of the PPS, one may reduce the error of the local clock bias $t_u$, the error of the timing variation rate of the local clock $\dot{t}_u$, or the error of the local clock counts. The present teaching mainly focuses on reductions of the error of the local clock bias $t_u$ and the error of the timing variation rate of the local clock $\dot{t}_u$ to achieve improved accuracy of the PPS. For simplicity, in the following description, local clock bias $t_u$ is referred to as clock bias $t_u$, the timing variation rate (or frequency drift) of the local clock $\dot{t}_u$ is referred to as clock drift $\dot{t}_u$, and the local clock frequency f is referred to as clock frequency f.

As the clock bias $t_u$ is the difference between the local time of the receiver and the system time of the navigation system, the navigation system time can be determined by compensating the local time of the receiver according to the clock bias $t_u$. The determined navigation system time may be output via a PPS directly. The accuracy of the clock bias $t_u$ is related to tracking quality of satellites in the navigation system. The clock bias $t_u$ is conventionally calculated based on four or more satellites' pseudorange information. Therefore, errors of the pseudorange directly affect the accuracy of the clock bias $t_u$.

In addition, an error of a positioning result may also be caused by errors in the ionospheric and tropospheric regions, and/or positioning methods or strategies at the receiver itself. All of these factors affect the accuracy of the clock bias $t_u$. At the time of positioning, the clock frequency $f = f_0 \cdot (1 + \dot{t}_u)$, wherein $f_0$ is the nominal frequency of the receiver. Thus, increasing the accuracy of the clock drift $\dot{t}_u$ can reduce error of the clock frequency f, thereby enhancing the accuracy of the PPS. The present teaching aims at improving performance respectively for each of the several major error sources of the PSS as mentioned above, thereby improving the accuracy of PPS.

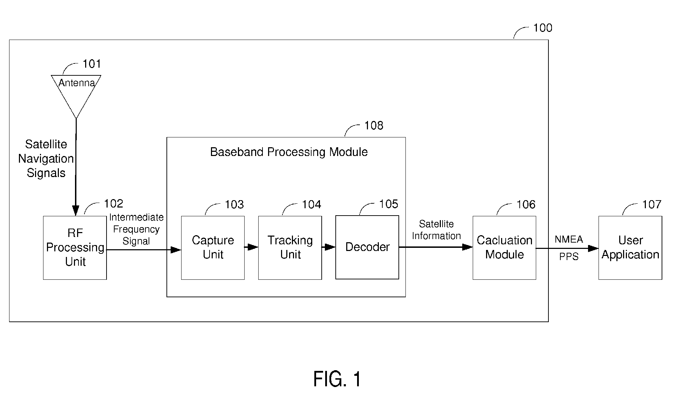

FIG. 1 is a block diagram illustrating an exemplary receiver, in accordance with one embodiment of the present teaching. As shown in FIG. 1, the receiver 100 in this example includes an antenna 101, an RF (Radio frequency) processing unit 102, a baseband processing module 108, and a calculation module 106.

In this example, the antenna 101 receives satellite signals from a plurality of navigation satellites in a satellite navigation system. The RF processing unit 102 converts the received signal into an intermediate frequency signal that the baseband processing module 108 may process. The baseband processing module 108 further includes a capture unit 103, a tracking unit 104, and a decoder 105. The baseband processing module 108 receives an intermediate frequency signal indicating the satellite navigation signals, and assigns resources to the satellite based on factors including e.g. the satellite's visibility, performance, its environment, etc. The assigned resources include hardware resources like capture channel and tracking channels, as well as software resources like resources of a CPU system. The capture unit 103 and the tracking unit 104 captures and tracks respectively the satellites to which resources have been assigned, and generate navigation messages each of which corresponding to a respective positioning satellite, according to the captured and tracked satellite information from the respective positioning satellite. The decoder 105 receives the navigation message and decodes the navigation message to obtain satellite information including e.g. pseudorange, coordinate information, speed information, frequency information, etc.

It should be noted that the satellite navigation signals may be received from a plurality of navigation systems. Due to the different modulation methods and/or frequencies among most navigation systems, navigation messages of the navigation systems have different formats. Therefore, according to a category of the navigation system supported by the receiver, the receiver can be designed selectively to have a different antenna, a different RF signal processing unit, and/or a different baseband processing module. In one embodiment, according to different navigation systems (e.g., BD and GPS satellite navigation systems), each of the receiver antenna 101, the RF processing unit 102 and the baseband processing module 108 is designed to have a different hardware configuration to receive and process satellite navigation signals respectively from different navigation systems. In another embodiment, according to different navigation systems (e.g., Glonass and Galileo satellite navigation systems), each of the receiver antenna 101, the RF processing unit 102 and the baseband processing module 108 has the same hardware configuration but can be equipped with different software dealing with different functions related to navigation. In this situation, the receiver can simultaneously receive and process satellite navigation signals from different satellite navigation systems.

The calculation module 106 receives satellite information including e.g. pseudorange, coordinate information, speed information, frequency information, etc, to calculate the location information and/or the speed/velocity information of the receiver 100. The calculation module 106 can also simultaneously calculate the clock bias $t_u$ between the local time of the receiver 100 and the system time of the navigation system, and simultaneously calculate the clock drift $\dot{t}_u$. After the calculating module 106 calculates the location information and speed information of the receiver 100, the calculating module 106 converts the information into a standard National Marine Electronics Association (NMEA) signal and transmits the signal to a user application 107. Thus, it is convenient for a user to accesses and/or uses the position information and speed information of the receiver 100. At the same time, the calculation module 106 can also achieve a more accurate navigation system time and output the navigation system time via PPS. The navigation system time can be determined based on the calculated clock bias $t_u$ and the calculated clock drift $\dot{t}_u$. While the present teaching mainly utilizes single navigation systems as examples to describe the calculation of the clock bias $t_u$ and the clock drift $\dot{t}_u$, it can be understood by one skilled in the art that the methods disclosed in the present teaching are equally applicable to multi-navigation systems.

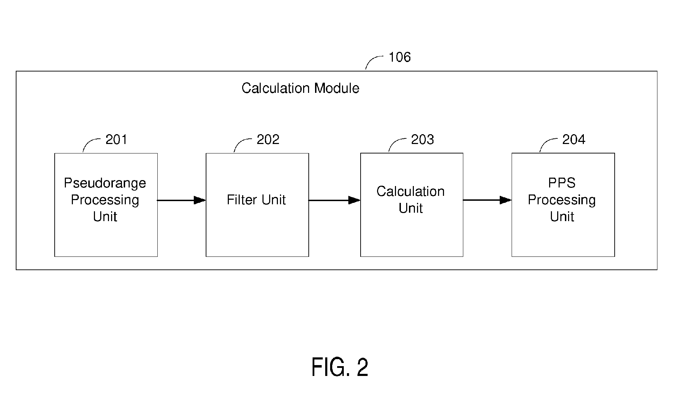

FIG. 2 is a block diagram illustrating an exemplary calculation module 106, in accordance with one embodiment of the present teaching. In one embodiment, this calculation module 106 is the calculation module 106 shown in FIG. 1. As shown in FIG. 2, the calculation module 106 comprises a pseudorange processing unit 201, a filter unit 202, a calculation unit 203, and a PPS processing unit 204.

In this example, the pseudorange processing unit 201 utilizes Carrier-Smoothed-Code Processing (CSC) to improve accuracy of the satellite pseudorange. An equation for the receiver's position measurement may be the following:

$$\rho_j = \sqrt{(x_j - x_u)^2 + (y_j - y_u)^2 + (z_j - z_u)^2} + c \cdot t_u + \text{Iono} + \text{Tropo} + \upsilon_\rho \quad (1)$$

herein, $\rho_j$ represents pseudorange between the j-th satellite to the receiver 100 measured through some codes; $(x_j, y_j, z_j)$ represents position of the j-th satellite; $(x_u, y_u, z_u)$ represents location of the receiver 100; $t_u$ represents clock bias between the receiver and the navigation system; c represents the speed of light; Iono represents the ionospheric delay; Tropo represents the tropospheric delay; $u_\rho$ represents measurement error of pseudorange, which includes errors caused by multi-path, interference, etc.

Based on equation (1), the accuracy of satellite pseudorange is one of the key factors affecting the accuracy of the clock bias. The position of the receiver and the clock bias $t_u$ can be calculated based on four equations associated with satellite pseudorange measurements. When satellite pseudorange measurement has a relative large error, there is a large error in clock bias $t_u$ measurement as well. Great multipath error in code observations may be smoothed based on phase observations that have smaller multipath error, e.g., via a Hatch filter (not shown in FIG. 2). Thus, multipath error in code observations may be substantially weakened. An equation for the receiver's carrier phase observation may be the following:

$$\Phi_j = \sqrt{(x_j - x_u)^2 + (y_j - y_u)^2 + (z_j - z_u)^2} + c \cdot t_u - \text{Iono} + \text{Tropo} + \lambda \cdot N + \upsilon_\Phi \quad (2)$$

wherein, $\Phi_j$ represents carrier phase of the j-th satellite; A represents the carrier wavelength; N represents the number of cycles of the carrier phase, which contains a value less than the entire cycle; $\upsilon_\Phi$ represents error of the carrier phase measurement. Carrier phase measurement represents a phase difference between the received satellite carrier signal and the reference carrier signal generated by an oscillator in the receiver. Compared to the pseudorange $\rho$ measured

by the pseudo-code, carrier phase $\Phi$ is less affected by the multipath or interference. Therefore, the carrier phase $\Phi$ can be utilized to perform smoothing via CSC.

Specifically, a Hatch filter (not shown in FIG. 2) utilizes a relationship between the pseudorange measurement equation (1) and the carrier phase observation equation (2) to obtain a smoothed pseudorange equation as the following:

$$\hat{\rho}_j(k) = W \cdot \rho_j(k) + (1 - W) \cdot [\hat{\rho}_j(k-1) + \Delta\Phi_j(k)] \qquad (3)$$

wherein, W represents the weight; k represents the k-th time; $\hat{\rho}_j$ represents pseudorange of the j-th satellite after smoothing via CSC; $\Delta\Phi_j$ denotes the carrier phase increment of the j-th satellite. In one embodiment, the weight W is 0.1. It can be understood by one skilled in the art that the value of the weight may be set according to the actual situation; and the above example cannot be considered as limiting the present teaching. In addition, CSC may have other algorithms and processing methods that are not discussed here for simplicity. The above mentioned CSC processing with respect to pseudorange is an embodiment of the present teaching and cannot be regarded as limiting the present teaching.

Thus, after pseudorange is smoothed by the CSC, the accuracy of satellite pseudorange is improved, while the accuracy of the positioning is improved as well. The pseudorange processing unit 201 performs CSC smoothing on pseudorange to get more accurate satellite pseudorange values. In one embodiment, based on pseudorange smoothed by the CSC, the clock bias $t_u$ can be calculated by solving simultaneous equations mentioned above directly. The clock bias $t_u$ calculated in this manner is more accurate was compared to that calculated in a traditional method. Thus, the accuracy of the clock bias $t_u$ is improved indirectly. The screening unit 202 is configured for screening and filtering the captured and tracked satellites, mainly based on strength, elevation, satellite tracking quality, type of the satellite, etc, in addition to the overall environment of satellite signals. The screening unit 202 also calculates position and velocity of the receiver 100 based on the filtered or selected specific satellites. The specific methods of screening and filtering satellites are well known to one skilled in the art, and are thus not mentioned here for simplicity.

The filter unit 202 is configured to determine one or more satellites for calculation. The calculation unit 203 obtains calculated position and velocity of the receiver 100, based on the pseudorange values obtained by the pseudorange processing unit 201 corresponding to the one or more satellites, and the satellites' frequency information. In one embodiment, GP1 ~ GP4 are four selected GPS satellites after filtering satellites in a GPS system, with position coordinates $(x_1, y_1, z_1) \sim (x_4, y_4, z_4)$, wherein the position coordinates of the receiver is $(x_u, y_u, z_u)$. Four equations can be obtained based on the positions and pseudoranges of the four GPS satellites. The position coordinates $(x_u, y_u, z_u)$ and the clock bias $t_u$ associated with the receiver 100 can be obtained by solving the four equations. In addition, the velocity and the clock drift $\dot{t}_u$ associated with the receiver 100 can also be calculated, based on technique known to one skilled in the art, which is not described here in detail.

After the calculation unit 203 calculates the position and velocity of the receiver 100, the calculation unit 203 can also achieve the clock bias $t_u$ and the clock drift $\dot{t}_u$, based on CSC smoothed pseudorange. The navigation system time can be calculated directly based on the clock bias $t_u$ and the clock drift $\dot{t}_u$ calculated in this manner. In one embodiment, in addition to the above manner, the clock bias $t_u$ and the clock drift $\dot{t}_u$ can be calculated through the PPS processing unit 204, to obtain a more accurate navigation system time. The process for calculating the clock bias $t_u$ and the clock drift $\dot{t}_u$ will be described in detail in the following embodiments.

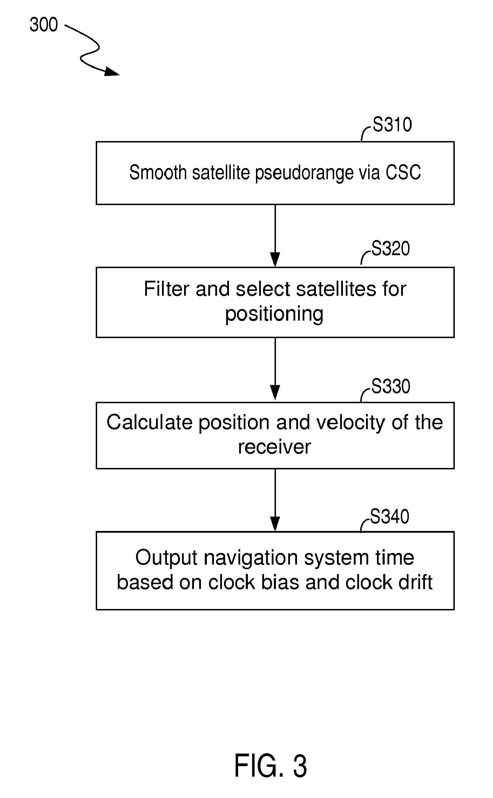

FIG. 3 is a flowchart illustrating an exemplary process 300 for calculating the clock bias $t_u$ and the clock drift $\dot{t}_u$ performed by a calculation module 106, e.g. the calculation module 106 shown in FIG. 1, in accordance with one embodiment of the present teaching. The FIG. 3 will be described in conjunction with FIG. 2. As shown in FIG. 3, the exemplary process 300 in this embodiment comprises the following.

At S310, satellite information about pseudorange and frequency is received, a more accurate value of pseudorange is obtained by performing CSC smoothing on the received pseudorange, and the process goes to S320.

At S320, the satellite receiver screens and filters the tracked and captured satellites, and the process does to S330.

At S330, based on information about the pseudorange and frequency of the filtered satellites, position and velocity of the receiver are calculated, and the process goes to S340.

At S340, clock bias $t_u$ and clock drift $\dot{t}_u$ are analyzed to calculate the navigation system time, so that the navigation system time can be output via PPS.

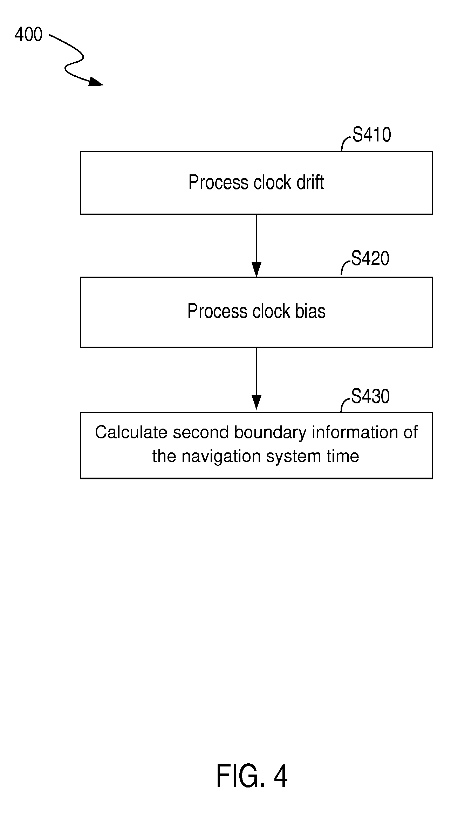

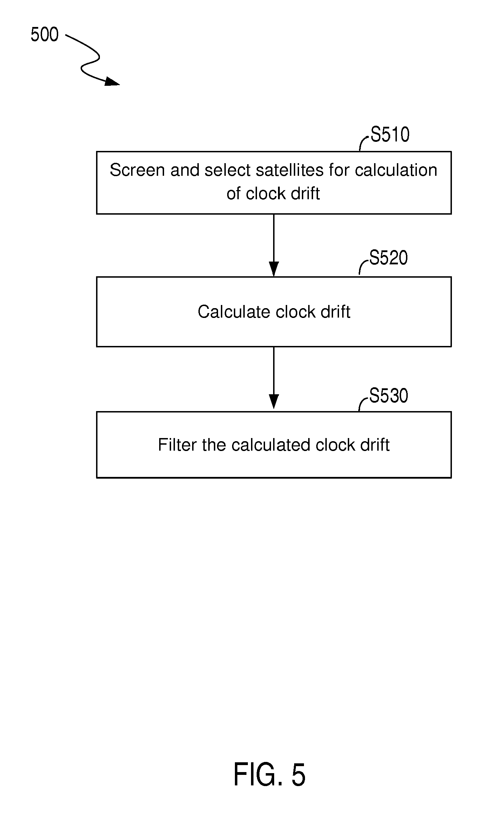

The process at S340 may be accomplished through S410 ~ S430 as shown in FIG. 4. As shown in FIG. 4, the clock drift $\dot{t}_u$ is first analyzed at S410. The process at S410 may be accomplished through S510 ~ S530 as shown in FIG. 5.

As shown in FIG. 5, satellites are screened and selected for calculation of clock drift $\dot{t}_u$ at S510. The strength of the satellite signal may be utilized as one of the indicators for the selection in practice, because the strength of the acquired satellite signal affects the accuracy of the clock drift $\dot{t}_u$. In one embodiment, average signal strength is first determined by averaging strength of all captured satellite signals. If a signal from a satellite is higher than the average signal strength, the satellite is selected. Otherwise, the satellite is not selected. It can be understood by one skilled in the art that the methods for screening satellites are well known. The above mentioned method based on strength is one of the well-known screening methods, and cannot be considered as limiting the present teaching.

At S520, the clock drift $\dot{t}_u$ is calculated. Since frequency drift such as the clock drift $\dot{t}_u$ is caused by the device (e.g. the receiver) itself, the value of the clock drift $\dot{t}_u$ may be obtained based on the speed information. In one embodiment, when a relatively accurate speed is known, the clock drift $\dot{t}_u$ of the receiver can also be calculated as the following. PPS is typically applied in a static scenario, where the accurate velocity or speed of the receiver is 0. In other scenarios with high precision requirements, an accurate speed of the receiver can be obtained via some speed-measurement device. Based on the satellite speed, one can achieve a more accurate calculation of the frequency from the satellite to the receiver:

$$f_{Rj} = f_{Tj}\left(1 - \frac{(\mathbf{v_j} - \dot{\mathbf{u}}) \cdot \mathbf{a_j}}{c}\right) \qquad (4)$$

wherein, $f_{Tj}$ represents the frequency of the satellite transmitted signal; $a_j$ represents a unit vector along a straight line directed from the receiver to the satellite; $v_j$ represents speed of the satellite; $\dot{u}$ represents speed of the receiver.

The frequency $f_j$ measured by the receiver contains a clock drift $\dot{t}_u$, that is:

$$f_{Rj} = f_j(1 - \dot{t}_u) \qquad (5)$$

It can be achieved based on equation (5):

$$\dot{t}_u = \frac{f_j - f_{Rj}}{f_j} \qquad (6)$$

While the equation (6) represents a clock drift $\dot{t}_u$ calculated based on a single satellite, an average clock drift $\dot{t}_u$ in practice may be calculated based on multiple satellites that are selected to good quality of satellite tracking, which is calculated using the following:

$$\dot{t}_u = \frac{1}{N}\sum_{j=0}^{N}\frac{f_j - f_{Rj}}{f_j} \qquad (7)$$

wherein, j represents the j-th satellite; N represents the number of satellites involved in the calculation. Thus, the accuracy of the clock drift calculation can be improved by the above method. In one example, the clock drift calculated by this method can be directly used to calculate the navigation system time. In another example, the clock drift calculated by this method can be filtered to obtain a more accurate clock drift.

At S530, the calculated clock drift is filtered. Since the local clock drift is determined by device characteristics, the clock drift $\dot{t}_u$ can be filtered or fit in real-time, based on different device characteristics. A common moving average filter can be used:

$$\hat{\dot{t}}_u(k) = \frac{1}{M}\sum_{i=k-M}^{k}\dot{t}_u(i) \qquad (8)$$

wherein, i represents the i-th time point; $\dot{t}_u(i)$ represents the clock drift calculated in real-time at the i-th time point; M represents the length of the sliding time window, whose length may be different based on different device characteristics.

When the clock drift is filtered, the clock drift $\dot{t}_u(i)$ in the equation (8) may be calculated by the method at S520, or by conventional methods. In one embodiment, the clock drift $\dot{t}_u(i)$ in the equation (8) is calculated by the method at S520 to achieve a higher accuracy clock drift.

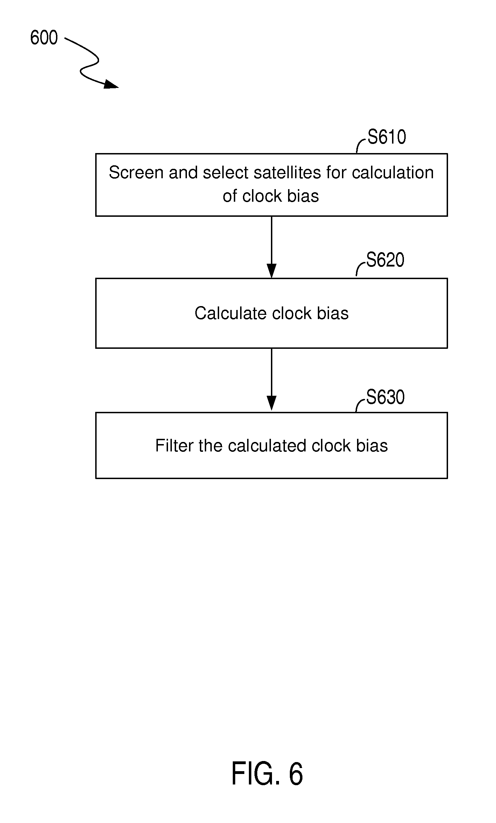

At S420, the clock bias $t_u$ is analyzed. As discussed above, a more accurate pseudorange measurement can be obtained by a smooth via CSC, compared to a traditional method. Besides increasing the accuracy of the pseudorange, an accuracy of the clock bias $t_u$ can also be improved by the following method shown in FIG. 6. Specifically, the processing at S420 can be accomplished through S610 ~ S630 as shown in FIG. 6.

As shown in FIG. 6, at S610, satellites are screened and selected to participate in the clock bias calculation. Here, the satellites are screened and selected based on pseudorange quality, signal strength, satellite elevation, loop tracking quality, etc. At S620, the clock bias is calculated. After determining the satellites for clock bias calculation, the estimate of the clock bias can be expressed as the following:

$$\hat{t}_u(k) = \frac{1}{c \cdot N} \sum_{i=1}^{N} (\rho_i(k) - D_i(k) - Iono - Tropo) \qquad (9)$$

$$D_i(k) = \sqrt{(x_i(k) - x_u(k))^2 + (y_i(k) - y_u(k))^2 + (z_i(k) - z_u(k))^2} \qquad (10)$$

wherein, $\rho_i(k)$ represents the pseudorange of the i-th satellite at the k-th time point; $D_i(k)$ represents the actual distance between the i-th satellite and the receiver at the k-th time point; Iono represents the ionospheric delay; and Tropo represents the tropospheric delay. The detailed calculation for $D_i(k)$ is well known to one skilled in the art, and is thus not discussed here for simplicity. In an embodiment of the present invention, the $D_i(k)$ is calculated by considering the effect of the Earth's self-rotation.

In one embodiment, the receiver is stationary, and the static position of the receiver can be modeled with a static model to improve the accuracy of the static position of the receiver, thereby improving the accuracy of $D_i(k)$. The method in the present teaching to obtain $D_i(k)$ also includes a support for an input from external indicating the exact position of the receiver. In addition, if $\rho_i(k)$ in equation (9) is replaced by a CSC smoothed pseudorange $\hat{\rho}_i(k)$, the accuracy of the clock bias can be further improved. Like the clock drift, the clock bias calculated based on equation (9) can be directly used to calculate the navigation system time; or, the calculated clock bias can be filtered to obtain a more accurate clock bias.

At S630, the clock bias is filtered. According to various embodiments of the present teaching, the filter can be a weighted sum. The estimate of the clock bias based on this filtering method may be expressed as:

$$\hat{t}_u(k) = W \cdot t_u(k) + (1 - W) \cdot (\hat{\dot{t}}_u(k-1) \cdot \Delta T + \hat{t}_u(k-1)) \qquad (11)$$

wherein, $t_u$ represents the estimated value of the clock drift, which can be a value from S530 in FIG. 5 after filtering; k represents the k-th time point; $\Delta T$ represents the time difference between the (k-1)-th time point and the k-th time point; W is the weight. The filtered clock bias can be calculated by a traditional method, or calculated after the CSC smoothing, or calculated following the equation (9). Filtering the clock bias may also improve the accuracy of the clock bias.

At S430, the boundary information (for each second) of the navigation system time PPS is calculated. As mentioned above, the navigation system time can be obtained by compensating the local clock of the receiver based on the determined clock bias and clock drift. In one embodiment, the local time at the receiver is assumed to be $T_r'$, where the local time clock count is $N_r$, the clock frequency is f, and the navigation system time is $T_r$. Then, there is a relationship:

$$T_r = T_r' - t_u \qquad (12)$$

Because $f = f_0 \cdot (1 + \dot{t}_u)$, $f_0$ is the receiver's nominal frequency, the next second boundary time for the navigation system time PPS is:

$$T_{pps} = floor(T_r) + 1 \qquad (13)$$

wherein, $floor(T_r)$ represents a greatest integer less than or equal to $T_r$. The local clock count corresponding to next second boundary of the PPS is:

$$N_{pps} = N_r + (T_{pps} - T_r) \cdot f \qquad (14)$$

When the local clock count reaches $N_{pps}$, the receiver can determine and output the second boundary, i.e. outputting the PPS, according to the configured format.

It should be noted that the above methods of calculating the clock bias and the clock drift are not in conflict with each other. Each of the above mentioned methods for improving the accuracy of the clock bias or the clock drift can be applied independently, or may be superimposed together. In an exemplary test, a superimposition of the above mentioned methods can achieve best performance.

Further, embodiments of the present teaching are applicable to not only dual-mode receiver but also single-mode receiver. Embodiments of the present teaching are applicable to not only GPS receivers, BD receivers, but also GLONASS receivers and Galileo receivers.

Ordinary persons having skills in the art can understand that the implementation of all or part of the processes in the above-described embodiments can be performed by a computer program instructing relevant hardware. The program may be stored in a computer readable storage medium, the program when executed, may include methods as discussed in the above embodiments. Among them, the storage medium may be a magnetic disk, optical disk, memory read-only memory (ROM) or random access memory (RAM) and so on.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

## Claims

1. A receiver for determining system time of a navigation system, comprising:

    a baseband processing module configured for obtaining satellite information from the navigation system; and
    a calculation module configured for:

        estimating a pseudorange based on the satellite information;
        smoothing the pseudorange via a code;
        calculating clock bias and clock drift based on the smoothed pseudorange; and
        determining system time of the navigation system based on the calculated clock bias and clock drift.

2. The receiver of claim 1, wherein the calculation module comprises:

a pseudorange processing unit configured for smoothing the pseudorange included in the satellite information;

a filter unit configured for screening captured satellites in the navigation system to select one or more satellites for positioning;

a calculation unit configured for calculating position and velocity of the receiver based on one or more smoothed pseudoranges corresponding to the one or more satellites; and

a PPS processing unit configured for calculating clock bias and clock drift based on the one or more smoothed pseudoranges and determining system time of the navigation system based on the calculated clock bias and clock drift.

3. The receiver of claim 1 or 2, further comprising:

an antenna configured for receiving satellite navigation signals from satellites in the navigation system; and

an RF processing unit configured for processing the satellite navigation signals to generate an intermediate frequency signal, wherein the baseband processing module is further configured for allocating resources to at least some of the satellites, tracking the satellites allocated resources to obtain the satellite information, wherein the satellite information comprises at least one of pseudorange, coordinate information, speed information and frequency information.

4. The receiver of one of claims 1 - 3, wherein:

the code is a Carrier-Smoothed-Code (CSC); and
the smoothed pseudorange is calculated as:

$$\hat{\rho}_j(k) = W \cdot \rho_j(k) + (1 - W) \cdot [\hat{\rho}_j(k-1) + \Delta\Phi_j(k)],$$

wherein W represents a weight; k represents k-th time point; $\hat{\rho}_j$ represents pseudorange of j-th satellite after smoothing via CSC; $\Delta\Phi_j$ denotes carrier phase increment of j-th satellite.

5. The receiver of one of claims 1 - 4, wherein the clock bias is calculated as:

$$\hat{t}_u(k) = \frac{1}{c \cdot N} \sum_{i=1}^{N} (\rho_i(k) - D_i(k) - \text{Iono} - \text{Tropo})$$

$$D_i(k) = \sqrt{(x_i(k) - x_u(k))^2 + (y_i(k) - y_u(k))^2 + (z_i(k) - z_u(k))^2}$$

wherein, $\rho_i(k)$ represents the pseudorange of i-th satellite at k-th time point; $D_i(k)$ represents actual distance between i-th satellite and the receiver at k-th time point; Iono represents an ionospheric delay; and Tropo represents an tropospheric delay.

6. The receiver of one of claims 1 - 5, wherein the clock drift is calculated as:

$$\dot{t}_u = \frac{1}{N} \sum_{j=0}^{N} \frac{f_j - f_{Rj}}{f_j}$$

wherein j represents j-th satellite; N represents number of satellites involved in the calculation.

7. The receiver of one of claims 1 - 6, wherein the clock drift is filtered by:

$$\widehat{\dot{t}_u}(k) = \frac{1}{M} \Sigma^k_{i=k-M} \dot{t}_u(i)$$

wherein i represents i-th time point; $\dot{t}_u(i)$ represents the clock drift calculated in real-time at i-th time point; M represents length of a sliding time window.

8. The receiver of one of claims 1 - 7, wherein the clock bias is filtered by:

$$\hat{t}_u(k) = W \cdot t_u(k) + (1 - W) \cdot (\widehat{\dot{t}_u}(k-1) \cdot \Delta T + \hat{t}_u(k-1))$$

wherein $\widehat{\dot{t}_u}$ represents an estimated value of the clock drift; k represents k-th time point; $\Delta T$ represents a time difference between (k-1)-th time point and k-th time point; W represent a weight.

9. The receiver of claim 2, wherein the PPS processing unit is further configured for:

   outputting the navigation system time via an impulse signal Pulse-Per-Second (PPS); and
   determining next second boundary time for the navigation system time PPS.

10. A method for determining system time of a navigation system, comprising:

   obtaining satellite information from the navigation system;
   estimating a pseudorange based on the satellite information;
   smoothing the pseudorange via a code;
   calculating clock bias and clock drift based on the smoothed pseudorange; and
   determining system time of the navigation system based on the calculated clock bias and clock drift.

11. The method of claim 10, further comprises:

   screening captured satellites in the navigation system to select one or more satellites for positioning; and
   calculating position and velocity of the receiver based on one or more smoothed pseudoranges corresponding to the one or more satellites.

12. The method of claim 10 or 11, further comprising:

   receiving satellite navigation signals from satellites in the navigation system;
   processing the satellite navigation signals to generate an intermediate frequency signal;
   allocating resources to at least some of the satellites; and
   tracking the satellites allocated resources to obtain the satellite information, wherein the satellite information comprises at least one of pseudorange, coordinate information, speed information and frequency information.

13. The method of claim 10, 11 or 12, wherein:

   the code is a Carrier-Smoothed-Code (CSC); and
   the smoothed pseudorange is calculated as:

$$\hat{\rho}_j(k) = W \cdot \rho_j(k) + (1 - W) \cdot [\hat{\rho}_j(k-1) + \Delta\Phi_j(k)],$$

wherein W represents a weight; k represents k-th time point; $\hat{\rho}_j$ represents pseudorange of j-th satellite after smoothing via CSC; $\Delta\Phi_j$ denotes carrier phase increment of j-th satellite.

**14.** The method of one of claims 10 - 13, wherein the clock bias is calculated as:

$$\hat{t}_u(k) = \frac{1}{c \cdot N} \sum_{i=1}^{N} (\rho_i(k) - D_i(k) - \text{Iono} - \text{Tropo})$$

$$D_i(k) = \sqrt{(x_i(k) - x_u(k))^2 + (y_i(k) - y_u(k))^2 + (z_i(k) - z_u(k))^2}$$

wherein, $\rho_i(k)$ represents the pseudorange of i-th satellite at k-th time point; $D_i(k)$ represents actual distance between i-th satellite and the receiver at k-th time point; Iono represents an ionospheric delay; and Tropo represents an tropospheric delay.

**15.** The method of one of claims 10 - 14, wherein the clock drift is calculated as:

$$\dot{t}_u = \frac{1}{N} \sum_{j=0}^{N} \frac{f_j - f_{Rj}}{f_j}$$

wherein j represents j-th satellite; N represents number of satellites involved in the calculation.

**16.** The method of one of claims 10 - 15, wherein the clock drift is filtered by:

$$\hat{\dot{t}}_u(k) = \frac{1}{M} \sum_{i=k-M}^{k} \dot{t}_u(i)$$

wherein i represents i-th time point; $\dot{t}_u(i)$ represents the clock drift calculated in real-time at i-th time point; M represents length of a sliding time window.

**17.** The method of one of claims 10 - 16, wherein the clock bias is filtered by:

$$\hat{t}_u(k) = W \cdot t_u(k) + (1 - W) \cdot (\hat{\dot{t}}_u(k-1) \cdot \Delta T + \hat{t}_u(k-1))$$

wherein $\hat{\dot{t}}_u$ represents an estimated value of the clock drift; k represents k-th time point; $\Delta T$ represents a time difference between (k-1)-th time point and k-th time point; W represent a weight.

**18.** The method of claim 11, further comprising:

   outputting the navigation system time via an impulse signal Pulse-Per-Second (PPS); and
   determining next second boundary time for the navigation system time PPS.

**19.** A machine-readable tangible and non-transitory medium comprising a computer program adapted to perform a method according to one of claims 10 - 18.

FIG. 1

106

Calculation Module

201
Pseudorange Processing Unit

202
Filter Unit

203
Calculation Unit

204
PPS Processing Unit

FIG. 2

**FIG. 3**

400

S410

Process clock drift

S420

Process clock bias

S430

Calculate second boundary information of
the navigation system time

# FIG. 4

500

S510

Screen and select satellites for calculation
of clock drift

S520

Calculate clock drift

S530

Filter the calculated clock drift

FIG. 5

600

```
                                                    ┌S610
┌─────────────────────────────────────────┐
│  Screen and select satellites for calculation │
│              of clock bias                 │
└─────────────────────────────────────────┘
                    │
                    ▼                       ┌S620
┌─────────────────────────────────────────┐
│                                          │
│           Calculate clock bias           │
│                                          │
└─────────────────────────────────────────┘
                    │
                    ▼                       ┌S630
┌─────────────────────────────────────────┐
│                                          │
│        Filter the calculated clock bias  │
│                                          │
└─────────────────────────────────────────┘
```

FIG. 6

Europäisches
Patentamt

European
Patent Office

Office européen
des brevets

# EUROPEAN SEARCH REPORT

Application Number

EP 14 17 7255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 740 048 A (ABEL JONATHAN S [US] ET AL) 14 April 1998 (1998-04-14)<br>* column 2, lines 8-63 *<br>* column 3, lines 36-54 *<br>* column 3, line 36 - column 4, line 14 *<br>* column 4, line 57 - column 5, line 56 *<br>* column 6, line 63 - column 7, line 20 *<br>----- | 1-19 | INV.<br>G01S19/23<br>G01S19/42<br><br>ADD.<br>G01S19/40 |
| X | US 2011/169689 A1 (WANG HANCHING GRANT [US] ET AL) 14 July 2011 (2011-07-14)<br>* paragraph [0002] *<br>* paragraph [0026] *<br>* paragraphs [0049], [0076] - [0079] *<br>* paragraphs [0169] - [0172] *<br>----- | 1-19 | |
| X | XIAOFAN LI ET AL: "Implementation and Performance of Clock Steering in a Software GPS L1 Single Frequency Receiver",<br>NAVIGATION, INSTITUTE OF NAVIGATION, FAIRFAX, VA, US,<br>vol. 57, no. 1, 1 June 2010 (2010-06-01), pages 69-85, XP056000011,<br>ISSN: 0028-1522<br>* page 70, right-hand column, line 18 - page 71, left-hand column, line 29 *<br>* page 75 - page 78 *<br>* page 83, right-hand column, line 1 - page 84, left-hand column, line 4 *<br>----- | 1-19 | |
| A | EP 1 237 008 A2 (ERIDE INC [US]; SEIKO EPSON CORP [JP])<br>4 September 2002 (2002-09-04)<br>* the whole document *<br>----- | 1-19 | TECHNICAL FIELDS SEARCHED (IPC)<br><br>G01S |

-/--

The present search report has been drawn up for all claims

| Place of search | Date of completion of the search | Examiner |
|---|---|---|
| The Hague | 26 November 2014 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 17 7255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANHONG KOU ET AL: "A Unique Software GPS Receiver and Simulator Platform for Clock Error Measurement and Simulation", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 2923, XP056000658, * the whole document * | 1-19 | |

-----

TECHNICAL FIELDS
SEARCHED        (IPC)

The present search report has been drawn up for all claims

| Place of search | Date of completion of the search | Examiner |
|---|---|---|
| The Hague | 26 November 2014 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 14 17 7255

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2014

| Patent document cited in search report | | Publication date | Patent family member(s) | | Publication date |
|---|---|---|---|---|---|
| US 5740048 | A | 14-04-1998 | NONE | | |
| US 2011169689 | A1 | 14-07-2011 | US | 2007118286 A1 | 24-05-2007 |
| | | | US | 2011169689 A1 | 14-07-2011 |
| EP 1237008 | A2 | 04-09-2002 | CN | 1373371 A | 09-10-2002 |
| | | | CN | 101339236 A | 07-01-2009 |
| | | | EP | 1237008 A2 | 04-09-2002 |
| | | | JP | 3574436 B2 | 06-10-2004 |
| | | | JP | 2002357652 A | 13-12-2002 |
| | | | US | 2002167441 A1 | 14-11-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310297717